# EUROPEAN PATENT SPECIFICATION

(11) **EP 4 122 610 B1**
(45) Date of publication and mention of the grant of the patent: **16.10.2024**
(21) Application number: 22186092.7
(22) Date of filing: 20.07.2022
(51) Int. Cl.: B07B 13/18, B28C 5/00

(54) **METHOD AND SAND PROCESSING SYSTEM FOR ACQUIRING A CONCRETE BASE MATERIAL CONTAINING SAND**
VERFAHREN UND SANDVERARBEITUNGSSYSTEM ZUM ERHALTEN EINES BETONBASISMATERIALS WELCHES SAND ENTHÄLT
PROCÉDÉ ET SYSTÈME DE TRAITEMENT DE SABLE POUR L'ACQUISITION D'UN MATÉRIAU DE BASE EN BÉTON CONTENANT DU SABLE

(30) Priority: 20.07.2021 NL 2028800
(43) Date of publication of application: 25.01.2023
(73) Proprietor: Smals Bouwgrondstoffen B.V., 5433 NM Katwijk (NL)
(72) Inventor: Gartsen, Hendrikus Gijsbertus, 5271 XA Sint Michielsgestel (NL); Van Ast, Antonette Nicoline, 6869 VM Heveadorp (NL)
(74) Representative: Arnold & Siedsma

(56) References cited:
- DE-A1- 1 949 668
- FR-A1- 2 484 664
- GB-A- 2 325 222
- US-A- 4 828 393
- US-A1- 2017 242 234

## Description

The invention relates to a method and sand processing system for obtaining a concrete starting material containing sand, particularly for building mortar.

Bulk quantities of concrete and cement are used in the creation of buildings, concrete products and artworks. The concrete comprises sand-containing concrete starting material. This sand is for instance extracted from the bottom of an excavation area, such as a waterway, excavation pool or, more generally, any body of water. The sand is suctioned up by means of a sand dredger installation and then processed on site or in the vicinity. The properties of concrete starting material (and also of the concrete to be made therefrom later, comprising inter alia a quantity of concrete starting material, sand and cement) depend to a significant extent on the properties of the sand incorporated therein, particularly on the sand grain size distribution of the sand.

The extraction of sand and the subsequent processing thereof requires labour and energy, and can be disruptive to nature. Screening and otherwise pretreating sand for the concrete production also requires labour and energy, as does the eventual production of concrete starting material using the sand. For all these reasons, the material chain for creating buildings and artworks is relatively expensive, and in many cases has an environmental impact.

In accordance with its abstract, UK patent application GB2325222A describes a method for producing refractory compositions, more particularly a method for producing castable refractory compositions, comprises combining appropriate quantities of bulk particulate refractory aggregates substantially without pre-mixing; separately adding to the aggregate system an appropriate quantity of a pre-blended binder composition; transporting the aggregate system and binder composition to an installation site; mixing at the site the aggregate system, binder composition and water and discharging the refractory composition.

In accordance with its independent claim, German patent application DE1949668A1 describes a device for the optimum utilization of the natural grain size of concrete gravel sands for the production of concrete, wherein the concrete gravel sand is classified by grain size and separated into grain groups by a screening plant, and wherein the mass fractions of the individual separated grain groups as well as the products from the mass fractions and the grain size are determined by the screening plant, in order to determine whether it is necessary to add an additive during grinding.In accordance with its abstract, US patent application US2017/0242234A1 describes a system for characterizing at least one particle from a fluid sample. The system includes a filter disposed upstream of an outlet, and a luminaire configured to illuminate the at least one particle at an oblique angle. An imaging device is configured to capture and process images of the illuminated at least one particle as it rests on the filter for characterizing the at least one particle. A system for characterizing at least one particle using bright field illumination is also disclosed. A method for characterizing particulates in a fluid sample using at least one of oblique angle and bright field illumination is also disclosed.

In accordance with its abstract, in French patent application FR2484664A1, a process and an installation are described for continuously mixing a bulk filling material, e.g. glacial silt, with a binding agent such as lime or cement. The correctly proportioned mixture is used in public works constructions, particularly for roads and motorways. A mechanical digger with rotary bucket wheel delivers the ballast over a weighing conveyor into a mixing hopper. The weighing appts. signals the rate of ballast delivery to a control unit which adjusts volumetric dispenser(s) delivering binding agent.

Document US 4 828 393 describes a method for obtaining base material for forming a concrete mortar. In a first step of this method either dry sand is extracted and then moistened, or wet sand is extracted and then dewatered. In both cases sand of a determined, suitable degree of moistness is provided. An additive in the form of fly ash is added to the moistened dry sand or the dewatered wet sand, and the whole of sand with fly ash is mixed in a mixer. The additive must have a grain size much smaller than that of the sand, characteristically a grain size of between 10 and 45 micrometres in respect of the aggregate relative to a grain size of 125 micrometres in respect of the sand. The additive in the form of fly ash further has in principle no reactivity with water, making the risk of undesired hardening of the mixture negligible. Finally, it is determined that a maximum of 15% of the sand can be replaced by the additive. Because the grain size of the additive supplied in dosed manner is much smaller than the grain size of the extracted sand, the additive can be used effectively to realize a desired overall grain size distribution ratio of the resulting mixture.

The known method however has a number of drawbacks.

Firstly, the requirement of the grain size of the additive having to be much smaller than the grain size (distribution) of the extracted sand forms a limitation on the materials which could be used as additive. With additives of a greater grain size it may be impossible to realize the desired overall grain size distribution ratio of the resulting mixture.

A further drawback is that, in the known method, additive is added and mixed into the extracted sand in dosed manner. No measurements take place on the composition (for instance the grain sizes and/or the mass) of the extracted sand, on the additive or on the resulting mixture of extracted sand and additive, so that the final composition of the mixture may vary, sometimes to undesirable degree.

The present invention has for its object to provide a way of making the material chain for creating buildings and artworks traceable, more efficient, sustainable and/or less harmful to the environment. Another object is to provide a method wherein the composition of the resulting mixture is known within small margins or can even be controlled and/or wherein use can be made of a great variety of additives, including additives with larger grain sizes (for instance in the order of magnitude of the extracted sand itself) and/or additives containing reactive components, such as cement that can react with water.

In order to achieve at least one of the objects at least partially, according to a first aspect of the invention the method of claim 1 is provided for obtaining a concrete starting material containing sand with a sand processing system, wherein the concrete starting material has a predetermined target composition, the method comprising:
- supplying sand of a first composition to a mixer using first supply means, wherein the sand of the first composition comprises one or more different fractions, and wherein a sand fraction has a pre-known sand grain size range from a plurality of sand grain size ranges;
- supplying sand of a second composition to a mixer using second supply means, wherein the second composition is defined by a second grain size distribution which is unknown at the start;
- mixing the supplied sand of the first composition with the supplied sand of the second composition in the mixer for the purpose of obtaining a sand mixture;
- performing at least one measurement on at least one of the sand of the second composition and the sand mixture for the purpose of determining the sand grain size distribution of this sand;
- determining on the basis of the measurement whether the sand mixture has said target composition; and
- controlling the first and/or second supply means on the basis of the measurement for the purpose of giving the sand mixture the target composition when the sand mixture does not have the target composition, wherein the target composition comprises a desired sand grain size distribution and wherein the method comprises giving the sand mixture the desired sand grain size distribution.

The second sand with the second composition is generally not stable or insufficiently stable in respect of reactivity and/or grain composition and/or is not constant or insufficiently constant in respect of distribution. The second composition can for instance have a (second) grain size distribution which not only is still unknown at the start, but also has a great variety. This makes it difficult to obtain a premix of a predetermined and desired constant quality. The second sand of the second composition can further possess a high degree of reactivity (for instance in that the fraction of unhydrated cement it contains is too large), so that this sand itself entails the risk of hardening at undesired locations, for instance in a silo or the like. This hardening must of course be prevented. By now giving the first sand a suitable composition and mixing the first sand with the second sand in dosed manner, and by measuring the composition of the resulting mixture, it can be ensured that a suitable resulting mixture (also referred to here as the premix) is always delivered.

In embodiments of the invention the sand of the second composition comprises at least an element reactive with water (wherein the reactive element is for instance cement). The sand of the second composition can for instance contain treated concrete waste. In determined embodiments the second (secondary) sand is for instance concrete crusher sand (CCS). Concrete crusher sand is the material (consisting mainly of sand with at least a reactive components such as cement) which results when demolished (and optionally treated) concrete rubble is broken. This material is normally unusable for further use in the concrete chain and is deemed a low-grade building material. This can have an environmental impact. The method according to the invention however makes it possible to incorporate the concrete crusher sand back into a mixture which can later be supplied to the concrete industry as premix to make new concrete therefrom. The method can here make a valuable contribution to the circular economy and/or to a reduction in environmental impact.
In determined embodiments the second sand of said second composition consists substantially of grains with grain sizes in a grain size range between 63 µm and 8000 µm, preferably between 100 mum and 500 mum. In these embodiments the second sand thus has a considerably greater grain size than aggregate such as fly ash (with a grain size between 10 µm and 45 µm).

In embodiments of the invention the steps of supplying sand of the first composition and sand of the second composition, of mixing the two sands and of performing the at least one measurement are performed in or close to the extraction location (particularly in or close to the processing location where the sand is extracted and processed further), for instance an excavation area, of sand of the first composition. The extraction location can for instance be a body of water (lake, excavation pool, river and so on) with a sandy bottom. The method is preferably performed in the same excavation area, or in the vicinity thereof, as the excavation area where the sand is extracted. In embodiments of the invention a method therefore comprises of extracting the sand of the first composition at the extraction location using the sand processing system, particularly sucking up sand from the bottom of an excavation pool and carrying the extracted sand to the first supply means. In other words, the sand of the first composition is collected at the extraction location and processed directly at that location into the sand mixture with the desired target mixture. The sand of the second composition however does come from a completely different source (than said bottom of the water body). In a preferred embodiment the method comprises supplying the sand of the second composition to the processing location from a location at a distance from the sand processing system (i.e. from a location outside the extraction area, so for instance outside the water body where the sand of the first composition is extracted). This supply takes place particularly by ship.

In a particular embodiment the method is performed by a sand processing system which is placed on a displaceable floating body, such as at least one pontoon. The sand processing system can comprise a sand dredger (optionally placed on the floating body) whereby the sand can be extracted from the extraction area. The sand can further be screened. The extraction area can comprise an excavation pool resulting from a spatial transformation which has created a water surface. The extraction area can however also comprise any other body of water, such as rivers, lakes and so on.

The invention is based on the surprising insight that it would be favourable to recycle concrete rubble into new concrete starting material. Large quantities of concrete rubble are created when buildings and artworks are demolished. A very common type of concrete rubble is the concrete waste created when concrete objects are demolished. The concrete rubble can first be screened, for instance for 8 mm or 16 mm granular size. The resulting concrete crusher sand can then be mixed with the sand from the extraction area (also referred to as the primary sand).This could save on labour and energy, and could decrease waste volumes. A difficulty is however that the sand grain size distribution of concrete crusher sand is variable and difficult to predict, and is thereby *a priori* unknown. The concrete crusher sand can thus not be mixed with other raw material components just like that, since the properties of the resulting raw material would then also become variable and difficult to predict. It would then be difficult in practice to obtain the desired target composition and/or to guarantee a determined desired composition of the supplied raw materials to the buyer. In order to make the concrete crusher sand suitable for such admixing, it would have to be screened beforehand or otherwise pretreated.

The invention is based on the insight that this drawback can be obviated at least partially by determining in a determined manner whether the resulting sand mixture complies with the desired target composition, and on controlling of the supply of the sand of different compositions to the mixing process. If several sand fractions with a known and consistent sand grain size range were to be supplied to a mixing process, a desired sand grain size distribution could usually be achieved by mixing these sand fractions in a predetermined ratio. The mixing process would here require no or only a limited degree of additional control. When use is now however made of a sand fraction with a substantially unknown and/or variable sand grain size distribution (i.e. a sand fraction which, although it has an unknown distribution, also has a distribution wherein the grain sizes lie between a determined minimum and maximum grain size), and this unknown sand fraction is mixed with sand with a known grain size distribution, the result can still be a concrete starting material with a suitable composition (in the sense of a correct grain distribution and a correct ratio between sand of the first composition and sand of the second composition). By further performing measurements on the resulting composition in the mixing process, for instance immediately before, during or immediately after the mixing process, the momentary sand grain size distribution of the concrete crusher sand and/or the momentary or overall sand grain size distribution of the resulting sand mixture can be determined. On the basis of this sand grain size distribution the mixing ratio between the concrete crusher sand and the other sand fractions and mutual mixing ratio between the other sand fractions can be controlled as desired in order to be able to adjust the sand grain size distribution of the final product during the mixing process. A concrete starting material with a desired sand grain size distribution can thereby be obtained.

The invention is particularly suitable for obtaining raw materials in large quantities, i.e. in bulk quantities. The invention is further particularly suitable for obtaining raw materials at or in the vicinity of a sand extraction location.

In determined embodiments the steps of the method are performed simultaneously and/or substantially continuously.

In determined embodiments the sand of the first composition is formed by supplying sand of a first sand fraction and sand of one or more further sand fractions with the first supply means.

In determined embodiments the method further comprises of separately supplying each sand fraction of the first sand fraction and the one or more further sand fractions to the first supply means; wherein the sand grain size range of each sand fraction is known and wherein the sand grain size range of each sand fraction preferably differs from the sand grain size range of every other sand fraction.

In determined embodiments none of the known ranges of the sand grain size distributions of the sand fractions overlap each other, wherein the predetermined ranges preferably cover a joint continuous range.

In determined embodiments the sand fractions of the sand of the first composition have sand grain size distributions lying within one or more of the ranges of about 63 µm - 250 mm, about 250 mm-500 mm, about 500 mm-2 mm, and about 2 mm - 8 mm.

In determined embodiments the sand of the second composition has a sand grain size distribution lying within the joint continuous range of the sand fractions and spanning a plurality of the known ranges.

In determined embodiments the sand fractions of the sand of the first composition are mixed during supply by the first supply means in order to impart a substantially uniform sand grain size distribution to the sand of the first composition.

Determined embodiments further comprise of producing at least a part of the sand fractions by extracting sand via a sand dredger and then, if necessary, screening the extracted sand.

In determined embodiments controlling of the supply comprises varying in time the quantity supplied per sand fraction to the first supply means.

In determined embodiments the first supply means and the second supply means comprise the same conveyor belt.

In determined embodiments the first supply means comprise a first conveyor belt and the second supply means comprise a different, second conveyor belt.

In determined embodiments at least one measurement is performed on sand of the second composition while this sand is being supplied by the second supply means, optionally on a sample of this sand.

In determined embodiments at least one measurement is performed on sand undergoing the mixing, optionally on a sample of this sand.

Determined embodiments comprise of feeding the sand mixture through further by means of discharge means after the mixing.

In determined embodiments the discharge means feed the sand mixture through to a transport means, preferably a ship.

In determined embodiments at least one measurement is performed on the sand mixture being discharged by the discharge means, optionally on a sample of this sand mixture.

In determined embodiments performing the at least one measurement comprises measuring the mass of sand passing a measuring location.

In determined embodiments performing the at least one measurement comprises measuring the sand grain size distribution of sand passing a measuring location.

In determined embodiments controlling of the first and/or second supply means comprises controlling the first supply means to vary in time the quantity of sand of the first composition which is supplied, preferably by controlling the speed of the first supply means and/or by temporarily interrupting the supply by the first supply means.

In determined embodiments controlling of the first and/or second supply means comprises controlling the second supply means to vary in time the quantity of sand of the second composition which is supplied, preferably by controlling the speed of the second supply means and/or by temporarily interrupting the supply by the second supply means.

Determined embodiments comprise the addition of marker to at least one of the sand of the first composition, the sand of the second composition and the sand mixture for the purpose of making the origin of the sand mixture detectable, preferably to the sand of the second composition during supply via the second supply means.

In determined embodiments the sand of the second composition comprises concrete crusher sand.

In determined embodiments the sand of the second composition comprises broken rock sand or certified sand from an unknown location.

In determined embodiments the method is performed wholly at a sand extraction location.

In determined embodiments the method is performed wholly by means of a substantially floating, displaceable sand processing system.

According to a second aspect, the invention comprises the sand processing system of claim 14 for obtaining a raw material for concrete starting material, which contains sand, wherein the concrete starting material has a predetermined target composition, the system comprising first supply means for supplying sand of a first composition, wherein the sand of the first composition comprises one or more different sand fractions, wherein a sand fraction has a pre-known sand grain size range from a plurality of sand grain size ranges; second supply means for supplying sand of a second composition, wherein the second grain constitution (i.e. the sand grain size distribution) is unknown at the start; a mixer for mixing the sand of the first composition and the sand of the second composition for the purpose of obtaining a sand mixture; measuring means for performing at least one measurement on at least one of the sand of the second composition and the sand mixture for the purpose of determining the sand grain size distribution of this sand; determining means for determining on the basis of the measurement whether the sand mixture has said target composition; and control means for controlling the first and/or second supply means on the basis of the measurement for the purpose of giving the sand mixture the target composition when the sand mixture does not have the target composition, wherein the target composition comprises a desired sand grain size distribution and the control means are configured to give the sand mixture the desired sand grain size distribution.

In determined embodiments the system is configured to make all means operative simultaneously and substantially continuously.

In determined embodiments the first supply means are configured to mix the sand fractions of the sand of the first composition during supply for the purpose of imparting a substantially uniform sand grain size distribution to the sand of the first composition.

Determined embodiments comprise a sand dredger for producing at least a part of the sand fractions by extracting sand and preferably screening means for screening extracted sand, if necessary.

In determined embodiments the degree of opening of each valve (with a chosen speed of a feeder belt or vibrating trough) is individually controllable for the purpose of varying in time the quantity supplied per sand fraction to the first supply means.

In determined embodiments the first supply means and the second supply means comprise the same conveyor belt.

In determined embodiments the first supply means comprise a first conveyor belt and the second supply means comprise a different, second conveyor belt.

In determined embodiments at least a part of the measuring means are configured and arranged to perform at least one measurement on sand of the second composition while this sand is being supplied by the second supply means, optionally on a sample of this sand.

In determined embodiments the mixer comprises a static mixer (descending step mixer) or drum mixer or mechanical mixer, wherein the mixer is preferably configured to mix sand substantially continuously.

In determined embodiments at least a part of the measuring means is configured and arranged to perform at least one measurement on sand situated in the mixer, optionally on a sample of this sand.

Determined embodiments further comprise discharge means configured and arranged to feed the sand mixture through further after mixing.

In determined embodiments the discharge means are configured to feed the sand mixture through to a transport means, preferably a ship.

In determined embodiments at least a part of the measuring means is configured and arranged to perform at least one measurement on the sand mixture being discharged by the discharge means, optionally on a sample of this sand mixture.

In determined embodiments at least a part of the measuring means is configured to perform at least one measurement by measuring a mass of sand.

In determined embodiments at least a part of the measuring means is configured to perform at least one measurement by measuring the sand grain size distribution.

In determined embodiments the control means are configured to control the first supply means to vary in time the quantity of sand of the first composition which is supplied, preferably by controlling the speed (or with a valve or feeder belt or vibrating trough) of the first supply means and/or by temporarily interrupting the supply by the first supply means.

In determined embodiments the control means are configured to control the second supply means to vary in time the quantity of sand of the second composition which is supplied, preferably by controlling the speed (or with a valve or feeder belt or vibrating trough) of the second supply means and/or by temporarily interrupting the supply by the second supply means.

Determined embodiments further comprise dispensing means for adding marker to at least one of the sand of the first composition and the sand of the second composition for the purpose of making the origin and/or composition of the sand mixture detectable, preferably to the sand of the second composition during supply via the second supply means.

In determined embodiments the system is configured to be situated wholly at a single location, preferably a sand extraction location.

In determined embodiments the system consists of a substantially floating, displaceable sand processing system.

The invention will be further elucidated hereinbelow with reference to a number of figures.
Figure 1 shows a first embodiment of a sand processing system 100 according to the invention.
Figure 2 shows a second embodiment of a sand processing system 100 according to the invention.
Figure 3 shows an embodiment of a method according to the invention.
Figure 4 shows a schematic representation of an embodiment of the invention.

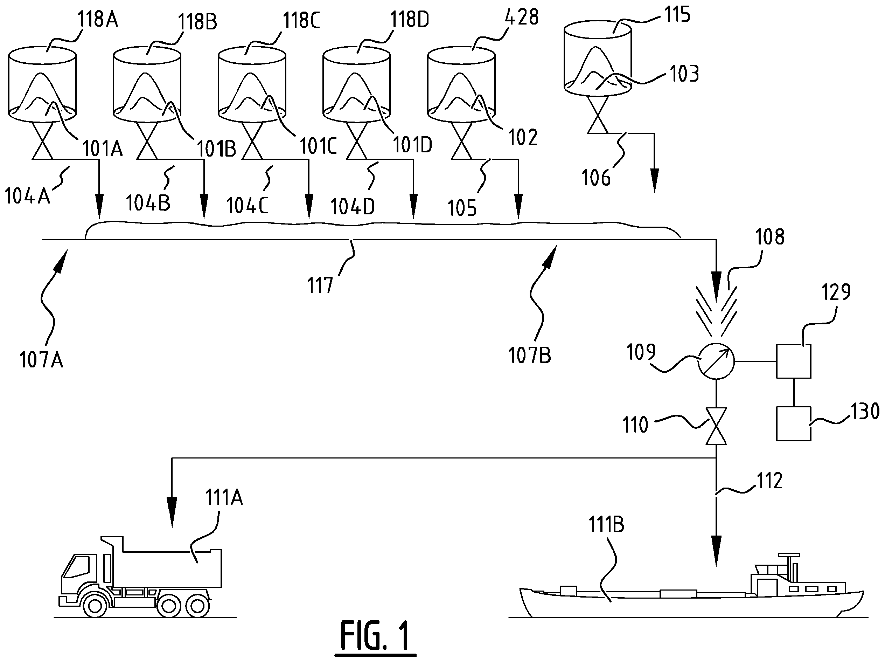

Figure 1 shows a first embodiment of a sand processing system 100 according to the invention.

The sand processing system 100 according to the invention is configured to process sand such that a concrete starting material of suitable composition (in the sense of grain size distribution of the sand and/or the ratio of the quantity of first sand (for instance primary sand) to the quantity of second sand (for instance concrete crusher sand)) is obtained. This is particularly important for a concrete manufacturer since the composition of the concrete starting material also determines the quality and properties of the concrete manufactured from the concrete starting material, cement and optional aggregates. According to embodiments of the invention, the sand processing system 100 is further configured to process sand such that the origin of the obtained concrete starting material (and thus also the concrete material provided thereby) remains traceable (and can be detected). This is particularly important for the further processors of the concrete material, such as contractors, housing associations and the like, who have to be able to determine the origin of the materials of the final product (for instance a building).

The sand of the first composition can be supplied from an external location or, preferably, be extracted at the same location, for instance by a sand dredger. This sand dredger can be disposed on a floating body, for instance on one or more pontoons, and can be configured to suction sand from the bottom of a water body. Suctioning sand with the sand dredger generally results in a composition which varies over time: when the head of the sand dredger is moved over the bottom during suctioning, the composition of the sand will vary depending on which position on the bottom the sand comes from. The supply of sand will have to be controlled in order to still be able to obtain sand with a predetermined fixed composition at the start of the method according to the invention, despite the variations in composition.

For this purpose the sand processing system can for instance comprise screening means (not shown in the figures) for sieving supplied or extracted sand, if necessary, so that sand can be separated into a number of different sand fractions with different sand grain size ranges. These sand fractions can be stored temporarily, for instance in different containers (for instance silos). When suctioning sand from the bottom of a water body from a floating body, the sucked-up sand can for instance be stored in a number of (for instance four or five) silos disposed on the floating body, wherein each silo contains a sand fraction with its own sand grain size range (for instance a first silo with a sand fraction with very small grains, smaller than a determined first threshold value, a second silo with sand with slightly larger grains (larger than the first threshold value but smaller than a second threshold value), a third silo with still larger grains (larger than the second threshold value and smaller than a third threshold value) and a fourth silo with sand with grains larger than the third threshold value). It must be noted here that the fraction 2-8 mm is officially deemed a fine gravel fraction. By supplying sand of different grain sizes from the different silos in correct quantities a quantity of sand of a determined composition, known at the start, can be obtained.

The sand for processing can otherwise contain some contamination. In determined embodiments the sand also undergoes a pretreatment or selection so that use is finally made of sand without contamination or with a very small degree of contamination.

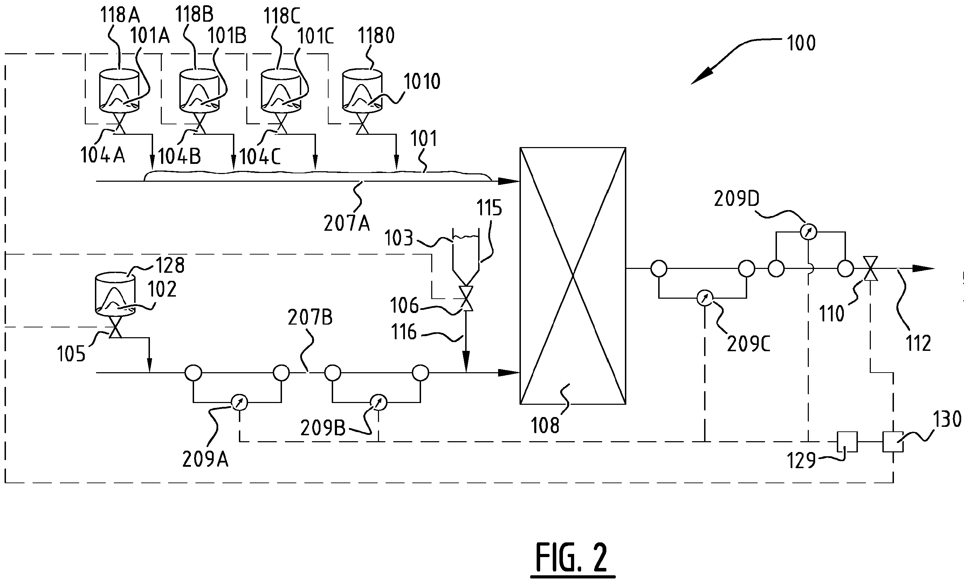

Referring to figures 1 and 2, the sand processing system 100 is configured, as already elucidated above, to process sand of a first composition 101, wherein the sand of the first composition comprises one or more different sand fractions 104A-104D and wherein at a given moment (for instance after said screening processes) each of the sand fractions has a pre-known sand grain size range from a plurality of sand grain size ranges. More generally, the grain size range of each sand fraction 101 can be known beforehand, for instance in that the grain size range is measured beforehand and/or in that the sand is separated into different grain size ranges, for instance by screening the sand in the above stated manner and/or separating it hydraulically/pneumatically.

In the embodiments shown in figures 1 and 2 the sand processing system 100 is configured to separately supply four sand fractions 101A-101D from four different silos 118A-118D, although other numbers of sand fractions are also possible. Each of these sand fractions comprises sand with grains with grain sizes in a predetermined range. In the embodiment shown in figure 1 the sand processing system 100 comprises first supply means 107A for separately supplying different sand fractions 101A-101D of the sand of the first composition. In the shown embodiment the first supply means 107A comprise a number of controllable valves or feeder belts 104A-104D whereby sand from respective silos 118A-118D can be arranged as desired and varying in time onto one or more conveyors 117 (for instance one or more endless belt conveyors, disposed under the different silos 118A-118D filled with the respective sand fractions 101A-101D). The first supply means can alternatively also comprise different conveyors for each of the silos, but in the shown embodiment the conveyors are combined into one single (joint) conveyor 117.

A first valve 104A is configured to supply a first sand fraction 101A, and optional further supply means 104B-104D are configured to each supply a respective sand fraction of one or more further sand fractions 101B-101D, in this case three further sand fractions 101B, 101C, 101D.

In the embodiment shown in figure 1 the sand processing system 100 comprises joint first and second supply means 107A, 107B to which the sand of the first composition 101A-101D and the sand of the second composition 102 are initially supplied. The joint supply means 107A, 107B form a joint conveyor belt 117 which is configured to place layers of sand with known composition from the silos 118A-118D and sand with an unknown composition from silo 128 on each other. The layers are optionally already mixed to some extent during transport, but a further, more extensive mixing takes place in the mixer 108.

In determined embodiments the sand processing system 100 can also be configured to add a marker 103. Marker 103 can take different forms in which it is suitable for making the origin and/or composition of the final product of the sand processing system 100 detectable. Marker 103 can for instance comprise grains of sand, plastic or metal of a predetermined colour or colour composition for the purpose of making sand, an intermediate product, concrete starting material or the concrete manufactured inter alia with the concrete starting material and produced with this sand optically recognizable. The marker 103 can also comprise a liquid and/or solid substance which has physical properties such that once the substance has been mixed with the sand, it is easily detectable. It is possible to envisage a liquid and/or solid substance which generates a clearly detectable frequency response when optically illuminated. On the basis of this response it is then possible to detect whether or not the substance has been added to the sand or not, and in fact whether a determined quantity of sand has been processed by the method described here and/or the processing system described here.

In the embodiments shown in figures 1 and 2 the sand processing system 100 comprises dispensing means 106 for adding this marker 103 in dosed manner. The dispensing means can comprise a controllable valve (as shown in figure 2) for dispensing a quantity of marker to the first supply means 107, 207A or the second supply means 107B, 207B in controlled manner. The valve of the dispensing means can for instance open and close a feed 116 from a marker container 115, for instance a silo, as desired for the purpose of supplying the marker 103 in controlled manner via the feed 116. The dispensing means 106 are preferably configured such that the addition of marker 103 can be remotely controlled.Sand processing system 100 of figure 1 is further configured to process sand of a second composition 102. In determined embodiments this sand has already been extracted elsewhere (i.e. at a distance from the extraction location of the sand of the first composition) and transported via suitable transport means, such as ships and/or trucks, to the processing location (in many cases the extraction location corresponds to the processing location because the extraction and further processing are essentially performed at the same location. In other cases the extraction location and processing location are at different geographic positions, preferably - though not necessarily - in each other's vicinity, for instance at a maximum of a few kilometres). In determined embodiments the composition of this sand is in principle unknown when it arrives at the location, so that the grain size distribution of this sand is unknown when the method according to the invention starts, but otherwise does lie within determined minimum and maximum grain sizes.

The sand of the second composition is supplied with second supply means 107B. In the embodiment shown in figure 1 the second supply means 107B comprise the above stated conveyor 117 (which is thus joint with the first supply means 107A), a silo 128 filled with the second sand 102, and a valve 106. The second supply means 107B are therefore preferably configured such that the supply of sand (and thereby the flow rate of the supply of sand) is controllable remotely and as desired, for instance by opening and closing the valve 106.

The joint (first and second) supply means 107A, 107B of figure 1 are configured to then supply the sand of the first composition 101 and the sand of the second composition 102 together. The sand of the first composition 101 and/or the sand of the second composition 102 can be marked with the marker 103 by the dispensing means 106 while they are being supplied by the joint supply means 107A, 107B. This is the case in the shown embodiment. It is however also possible to have the marking take place at a different location in the sand processing system 100, for instance prior to supply of the sand of the second composition 102 by means of the valve 105.

Het sand processing system 100 according to the invention is configured to mix the supplied sand of the first composition 101 and sand of the second composition 102 into a sand mixture by means of the above stated mixer 108. Sand processing system 100 according to figure 1 further comprises measuring means 109 for performing a measurement on sand. In the shown embodiment these are single measuring means 109 for performing a measurement on sand while or directly after the sand is (being) mixed by the mixer 108.

In the shown embodiment the sand processing system 100 is configured to discharge the sand mixture to one or more vehicles, for instance a land vehicle such as a truck 111A or, preferably, a vessel 111B such as a ship. Using dispensing means 110 the discharge can also be controlled via the discharge means 112. In the embodiment shown in figure 1 the sand processing system 100 comprises for this purpose discharge means 112, for instance conveyor belts. The sand processing system 100 according to the invention further comprises determining means 129, such as a computer, for determining whether the measured sand mixture complies with the predetermined target composition.

It is favourable for the different discussed elements of the sand processing system, for instance the different supply means and the mixer 108, to be configured to all be operative simultaneously and substantially continuously.

Figure 2 shows a second embodiment of a sand processing system 100 according to the invention. The second embodiment corresponds largely to that of figure 1. In the embodiment shown in figure 2 the sand processing system 100 comprises however separate supply means: first supply means 207A for supplying first sand of one or more sand fractions and second supply means 207B for supplying second sand. Similarly applicable to elements of this second embodiment which correspond to elements of the first embodiment is the description given there, unless differences are stated below. Elements of the first embodiment and elements of the second embodiment can be combined in different combinations, wherein the sand processing system 100 will still achieve its objectives at least partially. Elements of the first or second embodiment which are described in one or both cases as associated with the shown embodiment are not essential to the invention and can be omitted, wherein the sand processing system 100 will still achieve its objectives at least partially.

As stated above, in the embodiment shown in figure 2 the sand processing system 100 is configured to separately supply different sand fractions of the sand of the first composition. In the shown embodiment these are four sand fractions 101A-101C. In the shown embodiment the sand processing system 100 comprises second supply means 207B for supplying the sand of the second composition 102. The second supply means 207B comprise a conveyor, for instance a driven endless conveyor belt 127, a container 128 (for instance a silo) for containing the second sand 102, and a valve 105. The valve 105 is preferably configured such that supply of second sand 102 to the conveyor is controllable, for instance by opening and closing valve 105 as desired.

In the shown embodiment the sand processing system 100 comprises dispensing means 106 for adding marker 103. The dispensing means can comprises a valve 106 toward the second supply means 207B, wherein the valve can for instance close a silo 115 containing the marker 103. The dispensing means 106 are preferably configured such that the addition of marker 103 is controllable, for instance by opening and closing the dispensing means 106.

It is otherwise possible to perform measurements on the first sand in order to determine the exact composition, for instance the sand grain size distribution, of the different sand fractions 101A-101C individually or of the sand of the first composition being supplied by the first supply means 107A, 207A. This can help in controlling the composition of the resulting sand mixture with additional accuracy. Additional measuring means (not shown) can be provided for this purpose.

It will be apparent to the skilled person that the first supply means 207A and second supply means 207B fulfil a corresponding role to the joint first and second supply means 107A and 107B of the above described first embodiment of the sand processing system 100 according to the invention, but differ in that supplying, measuring and controlling can take place separately in this second embodiment.

In the shown embodiment the sand processing system comprises measuring means, for instance one or more optical detectors, sampling and analysing equipment or the like, for performing one or more measurements on sand. In this case these are four measuring means 209A-209D. The four shown measuring means are first measuring means 209A which is configured to perform a measurement of the mass of the sand of the second composition 102 discharged by the second discharge means 207B, second measuring means 209B which is configured to perform a measurement of the grain size distribution of the sand of the second composition 102 discharged by the second discharge means 207B, third measuring means 209C which is configured to perform a measurement of the mass of the sand mixture discharged by the discharge means 112 (discussed below), and fourth measuring means 209D which is configured to perform a measurement of the grain size distribution of the sand mixture discharged by the discharge means 112.

It will be apparent to a skilled person that, according to the invention, different individual measuring means or different combinations of measuring means 209A-209D can be applied, and that different combinations of measured properties and measuring locations can be formed, wherein substantially the same operation of the sand processing system 100 can be achieved. In determined embodiments only the two measuring means 209B are for instance used to measure the grain sizes of the second sand. These measuring means 209B can be positioned just upstream of the feed 116 of marker 103, although in other embodiments the measuring means 209B are positioned between feed 116 and mixer 108 and/or downstream of mixer 108.

At least a part of the measuring means can be configured and arranged to perform at least one measurement on sand of the second composition while this sand is being supplied by the second supply means, and/or at least a part of the measuring means can be configured and arranged to perform at least one measurement on sand situated in the mixer, and/or at least a part of the measuring means can be configured and arranged to perform at least one measurement on the sand mixture being discharged by the discharge means. At least a part of the measuring means can be configured to perform at least one measurement by measuring a mass of sand, and/or at least a part of the measuring means can be configured to perform at least one measurement by measuring a sand grain size distribution. Measurements can optionally be performed on a sample of the sand in question.

In the shown embodiment the sand processing system 100 further also comprises dispensing means 110 for controlled discharge of the sand mixture using the discharge means 112, for instance conveyor belts.

The sand processing system 100 comprises control means 130 for controlling the supply means to give the sand mixture the target composition, wherein the target composition comprises a desired sand grain size distribution and wherein the control means 130 are configured to give the sand mixture the desired sand grain size distribution. This controlling can for instance comprise of controlling the first supply means to vary in time the quantity of sand of the first composition which is supplied, preferably by controlling the speed of the first supply means 107A, 207A and/or by temporarily interrupting the supply by the first supply means 107A, 207A, and/or of controlling the second supply means 107B, 207B to vary in time the quantity of sand of the second composition 102 which is supplied, preferably by controlling the quantity of the supply of sand via the second supply means 207B and/or by temporarily interrupting and releasing the supply by the second supply means 207B, and/or of controlling the valve 105 to vary in time the quantity supplied per sand fraction to the conveyor of the first supply means 107A, 207A, and/or of controlling the valve 105 to vary in time the quantity of sand of the second composition which is supplied to the conveyor of the second supply means 107B, 207B.

In different embodiments the sand processing system 100 is configured to be situated wholly at a single location, preferably a sand extraction location. The sand processing system 100 can for instance consist of a substantially floating, displaceable sand processing system.

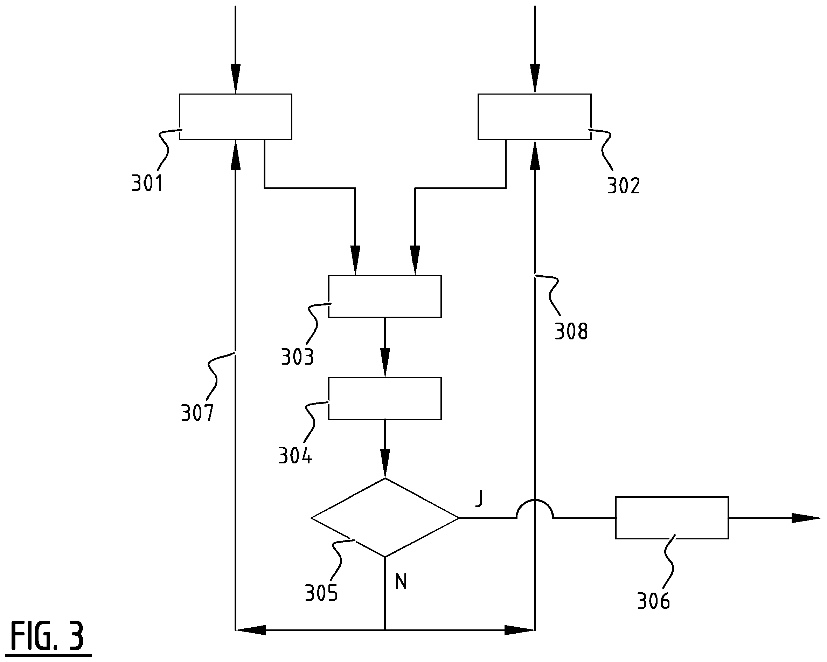

Figure 3 shows an embodiment of a method according to the invention. The connections between the steps shown in figure 3 are logical dependencies. The steps of the method according to the invention are preferably performed simultaneously and substantially continuously.

The method comprises supplying (step 301) sand of a first composition 101 (preferably via first means 107A, 207A), wherein the sand of the first composition comprises one or more different sand fractions (for instance 101A and 101B) and wherein a sand fraction has a pre-known sand grain size range from a plurality of sand grain size ranges. The sand of the first composition 101 or one or more sand fractions thereof can for instance be produced by extracting sand via a sand dredger and, if necessary, subsequently screening the extracted sand.

The sand of the first composition 101 can be formed by supplying sand of a first sand fraction and sand of one or more further, differing sand fractions to the first supply means, for instance by supplying different sand fractions separately by means of the first supply means, wherein the sand grain size range of each sand fraction is known and wherein the sand grain size range of each sand fraction preferably differs from the sand grain size range of every other sand fraction. Controlling the supply of the first sand can here comprise of varying in time the quantity supplied per sand fraction to the first supply means 107A, 207A.

It is possible here to opt for an approach wherein none of the known ranges of the sand grain size distributions of the sand fractions substantially overlap, wherein the predetermined ranges preferably cover a joint continuous range, for instance sand grain size distributions lying within one or more of the ranges of about 63mum- 250mum, about 250mum-500mum, about 500mum-2mm, and about 2mm-8mm (in this latter case reference is also made to a "gravel fraction"). The unit "mum" here designates micrometre (µm or mu). In this respect reference is also made to the Dutch standards aimed at identification of raw material types, NEN EN 933-1 2012, NEN EN 12620 and NEN 5905 2005.

The sand fractions of the sand of the first composition 101 can already be mixed during supply by the first supply means in order to impart a substantially uniform sand grain size distribution to the sand of the first composition 101.

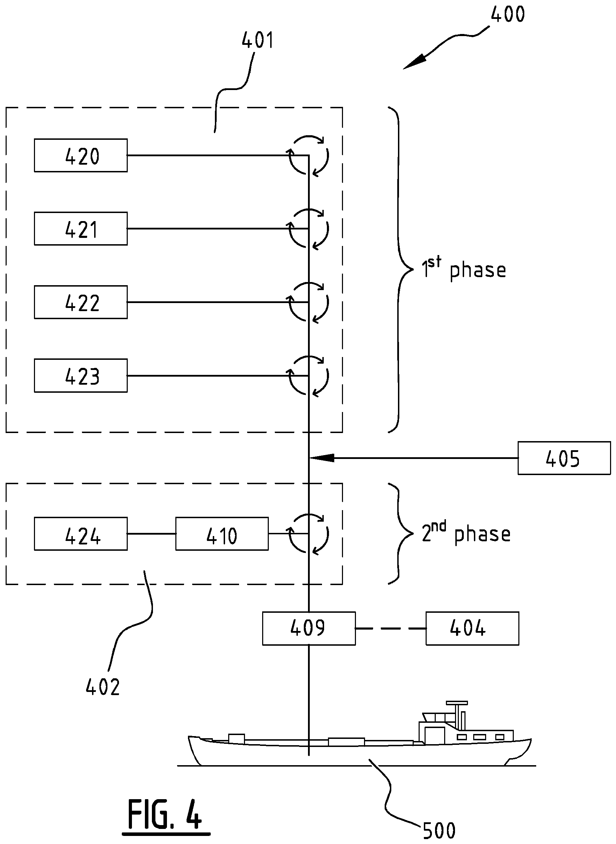

The method according to figure 4 also comprises supplying (step 302) sand of the second composition (preferably via a second supply means 107B, 207B). The sand of the second composition has an unknown composition at the start (with the understanding of course that the precise composition is unknown within determined maximum and minimum grain size limits lying far apart). The sand of the second composition 102 can for instance have a sand grain size distribution lying within the joint continuous range of the sand fractions and spanning a plurality of the known ranges. The sand of the second composition can comprise concrete crusher sand, and/or broken rock sand and/or certified sand from an unknown extraction location.

The method according to the invention comprises mixing 303 the sand of the first composition 101 and the sand of the second composition 102 in order to obtain a sand mixture. The method comprises subsequently performing (step 304) at least one measurement on at least one of the sand of the second composition 102 and the sand mixture for the purpose of determining the sand grain size distribution of the sand. At least one measurement can for instance be performed on sand of the second composition 102 while this sand is being supplied by the second supply means 207B, or on sand undergoing the mixing.

After the mixing the determining means determine (step 305) whether the resulting sand complies with the target composition within determined margins. This can for instance be done by calculating the difference between the measured composition and the target composition. If this is the case (Y), the sand mixture can be further discharged (step 306) by means of discharge means 112, wherein the discharge means 112 can transport the sand mixture to a transport means, preferably a ship. If the target composition is not complied with, the determining means can determine that either (step 307) sand of the first composition or (step 308) sand of the second composition must be additionally added in order to achieve the target composition. In respect of the additional adding of sand of the first composition the determining means can also determine which individual sand fractions 101A-101D can be supplied in order to obtain a suitable first composition whereby the target composition can be achieved.

Performing the at least one measurement can comprise measuring the mass of sand passing a measuring location and/or the sand grain size distribution of sand passing a measuring location. Measurements can optionally be performed on a sample of the sand in question, for instance by passing the sample through a series of increasingly fine-meshed screens, for instance when measuring the sand grain size distribution.

When the sand mixture does not have the target composition the method comprises controlling the first and/or second supply means on the basis of the measurement for the purpose of giving the sand mixture the target composition, wherein the target composition comprises a desired sand grain size distribution. The method here comprises giving the sand mixture the desired sand grain size distribution.

In determined embodiments the method further comprises adding a marker 103 to at least one of the sand of the first composition 101 and the sand of the second composition 102, and the sand mixture for the purpose of making the origin of the sand mixture detectable, preferably to the sand of the second composition 102 during supply via the second supply means 107B, 207B.

The method according to the invention can be performed as a whole at a sand extraction location, wherein the method can for instance be wholly performed by means of a substantially floating, displaceable sand processing system which can also comprise a sand dredger for extracting sand. The method according to the invention can be performed in different embodiments by means of one or more corresponding embodiments of the sand processing system 100 according to the invention.

Figure 4 shows a further example of an embodiment of the method and the system according to the invention. In the shown embodiment the system 400 comprises a first unit 401 for providing first sand of the desired first composition (by mixing together sand of different compositions at a desired ratio, wherein use is made of a number of storage silos or storage bunkers 420, 421, 422, 423, wherein stored in each of the storage silos/bunkers 420-423 is sand within a separate sand grain size range, such as between 2 mm and 8 mm in silo 420, between 0.5 mm and 2 mm in silo 421, between 0.25 mm and 0.5 mm in silo 422 and between 0.063 mm and 0.25 mm in silo 423, and of dispensing means suitable for this purpose), a second unit 402 for adding to the first sand the second sand, particularly sand comprising treated concrete waste or low-grade building material such as concrete crusher sand (CCS) (wherein the second unit 402 has a storage silo/bunker 424, optionally also a crusher of the treated concrete waste, this being the low-grade building material, in case any lumps or the like are still present therein), a measuring unit 403 for measuring the composition of the resulting sand mixture, and a control unit 404 for optionally also mixing in on the basis of the measurement results sand coming from the first unit 401. The system optionally also comprises a unit 405 with dispensing means for dosed addition of marker.

The method has at least two stages: in a first stage a controlled mixing of (first) sand of different grain size ranges takes place in the first unit 401 and in a second stage a dry mixing in of treated concrete waste, such as concrete crusher sand (CCS), takes place in the second unit (402) (which receives the mixture from the first unit 401). The resulting mixture is then measured. If the measured mixture complies with the requirements set for the mixture beforehand (for instance grain sizes in the desired ranges, reactivity within predetermined margins, and so on), the mixture is ready as premix for the concrete industry and can be transported to the destination location by means of transport means 500 (ship, truck or the like). If the measurement shows that the mixture does not comply with the set requirements, (first) sand with the composition of the first unit 401 (with the same composition or with a changed composition) is added (in a further stage). This process of measuring, comparing to the requirements and optionally adjusting the composition of the mixture is repeated until the resulting mixture complies with the requirements made thereof.

Continuous adjustment of the dosage/grain constitution of the primary (first) sand makes it possible to guarantee the correct grain distribution of the premix to be supplied, and enables the reactivity of this premix to be brought within the desired bandwidth. It must be noted here that a reactivity which is too high results in hardening risks, a reactivity which is too low results in reduced bonding, this in turn resulting in an increase in (less sustainable) cement additives.

The premix hereby has a constant constitution, contains the desired quantity of second (secondary) material and is suitable for being stored in a silo so that it remains readily and directly processable at the end user (this for instance being concrete mortar plants and concrete product factories).

## Claims

1. Method for obtaining a concrete starting material containing sand with a sand processing system, wherein the concrete starting material has a predetermined target composition, the method comprising:
- supplying (301) sand of a first composition to a mixer using first supply means, wherein the sand of the first composition has a first grain size distribution, the sand comprises one or more different fractions, and wherein a sand fraction has a pre-known sand grain size range from a plurality of sand grain size ranges;
- supplying (302) sand of a second composition to a mixer using second supply means, wherein the second composition is defined by a second grain size distribution which is unknown at the start;
- mixing (303) the supplied sand of the first composition with the supplied sand of the second composition in the mixer for the purpose of obtaining a sand mixture;
- performing (304) at least one measurement on at least one of the sand of the second composition and the sand mixture for the purpose of determining the sand grain size distribution of this sand;
- determining (305) on the basis of the measurement whether the sand mixture has said target composition; and
- controlling the first and/or second supply means on the basis of the measurement for the purpose of giving the sand mixture the target composition when the sand mixture does not have the target composition, wherein the target composition comprises a desired sand grain size distribution and wherein the method comprises giving the sand mixture the desired sand grain size distribution.

2. Method according to claim 1, wherein the sand of the second composition comprises at least an element reactive with water, wherein the reactive element is for instance cement.

3. Method according to claim 1 or 2,
wherein the sand of the second composition is treated concrete waste and/or wherein the sand of the second composition is concrete crusher sand, and/or
wherein the sand of the second composition comprises broken rock sand and/or certified sand from an unknown extraction location.

4. Method according to any one of the foregoing claims, wherein the second sand of said second composition consists substantially of grains with grain sizes in a grain size range between 63 mum and 8000 mum, preferably between 100 mum and 500 mum.

5. Method according to any one of the foregoing claims, wherein supplying sand of the first composition, sand of the second composition, mixing the supplied sand and performing the at least one measurement are performed at an extraction location of sand of the first composition or in the vicinity of this extraction location, preferably comprising:
extracting the sand of the first composition at the extraction location using the sand processing system, particularly sucking up sand from the bottom of a water body, and carrying the extracted sand to the first supply means, and/or
supplying the sand of the second composition from a location at a distance from the sand processing system to the extraction location, particularly supplying sand of the second composition by ship.

6. Method according to any one of the foregoing claims, wherein the steps of the method are performed simultaneously and substantially continuously.

7. Method according to any one of the foregoing claims,
wherein the sand of the first composition is formed by supplying sand of a first sand fraction and sand of one or more further sand fractions to the first supply means using first supply means, wherein the sand grain size range of each sand fraction is known,
optionally comprising separately supplying each sand fraction of the first sand fraction and the one or more further sand fractions to the first supply means.

8. Method according to claim 7, wherein the sand grain size range of each sand fraction differs from the sand grain size range of every other sand fraction and/or wherein none of the known ranges of the sand grain size distributions of the sand fractions overlap,
wherein preferably the predetermined ranges cover a joint continuous range.

9. Method according to any one of the foregoing claims,
wherein sand fractions of the sand of the first composition have sand grain size distributions lying within one or more of the ranges of 63 mum to 250 mum, 250 mum to 500 mum, 500 mum to 2 mm, and 2 mm to 8 mm, and/or
wherein sand of the second composition has a sand grain size distribution lying within the joint continuous range of the sand fractions and spanning a plurality of the known ranges.

10. Method according to any one of the foregoing claims,
wherein the sand fractions of the sand of the first composition are mixed at least partially during supply by the first supply means in order to impart a more uniform sand grain size distribution to the sand of the first composition, and/or
wherein controlling of the supply comprises varying in time the quantity supplied per sand fraction to the first supply means.

11. Method according to any one of the foregoing claims,
wherein at least one measurement is performed on sand of the second composition while this sand is being supplied by the second supply means, optionally on a sample of this sand, and/or
further comprising, after mixing, discharging the sand mixture using discharge means, for instance a discharge conveyor, wherein the discharge means preferably discharge the sand mixture to a transport means, preferably a ship.

12. Method according to any one of the foregoing claims,
wherein at least one measurement is performed on the sand mixture being discharged by the discharge means, optionally on a sample of this sand mixture, and/or
wherein performing the at least one measurement comprises of measuring the mass of sand passing a measuring location and/or of determining the sand grain size distribution of sand passing a measuring location.

13. Method according to any one of the foregoing claims, further comprising the addition of marker to at least one of the sand of the first composition, the sand of the second composition and the sand mixture for the purpose of making the origin of the sand mixture detectable.

14. Sand processing system for obtaining a raw material for building mortar, which contains sand, wherein the concrete starting material has a predetermined target composition, the sand processing system comprising:
- first supply means (101A-101D) for supplying sand of a first composition, wherein the sand of the first composition comprises one or more different sand fractions, wherein a sand fraction has a pre-known sand grain size range from a plurality of sand grain size ranges;
- second supply means (102) for supplying sand of a second composition, wherein the second composition is unknown at the start;
- a mixer (108) for mixing the supplied sand of the first composition and the sand of the second composition for the purpose of obtaining a sand mixture;
- measuring means (109) for performing at least one measurement on at least one of the sand of the second composition and the sand mixture for the purpose of determining the sand grain size distribution of this sand; and
- determining means (110) for determining on the basis of the measurement whether the sand mixture has said target composition; and
- control means for controlling the first and/or second supply means on the basis of the measurement for the purpose of giving the sand mixture the target composition when the sand mixture does not have the target composition, wherein the target composition comprises a desired sand grain size distribution and the control means are configured to give the sand mixture the desired sand grain size distribution.

15. Sand processing system according to claim 14, wherein the system is configured to perform the method according to any one of the claims 1-13.

16. Sand processing system according to any one of the claims 14-15, further comprising a grinding unit, particularly a lump crusher, for at least partially crushing any lumpy sand in the obtained sand mixture.

## Patentansprüche

1. Verfahren zur Gewinnung eines sandhaltigen Betonausgangsmaterials mit einem Sandverarbeitungssystem, wobei das Betonausgangsmaterial eine vorbestimmte Zielzusammensetzung aufweist, das Verfahren umfassend:
- Zuführen (301) von Sand einer ersten Zusammensetzung zu einem Mischer unter Verwendung eines ersten Zufuhrmittels, wobei der Sand der ersten Zusammensetzung eine erste Korngrößenverteilung aufweist, der Sand eine oder mehrere verschiedene Fraktionen umfasst, und wobei eine Sandfraktion einen vorher bekannten Sandkorngrößenbereich aus einer Vielzahl von Sandkorngrößenbereichen aufweist;
- Zuführen (302) von Sand einer zweiten Zusammensetzung zu einem Mischer unter Verwendung eines zweiten Zufuhrmittels, wobei die zweite Zusammensetzung durch eine zweite Korngrößenverteilung definiert ist, die zu Beginn unbekannt ist;
- Mischen (303) des zugeführten Sandes der ersten Zusammensetzung mit dem zugeführten Sand der zweiten Zusammensetzung in dem Mischer, um eine Sandmischung zu erhalten;
- Durchführen (304) mindestens einer Messung an mindestens einem der Sande der zweiten Zusammensetzung und der Sandmischung, um die Sandkorngrößenverteilung dieses Sandes zu bestimmen;
- Bestimmen (305) auf der Grundlage der Messung, ob die Sandmischung die Zielzusammensetzung aufweist; und
- Steuern des ersten und/oder zweiten Zufuhrmittels auf der Grundlage der Messung, um die Sandmischung mit der Zielzusammensetzung zu versehen, wenn die Sandmischung nicht die Zielzusammensetzung aufweist, wobei die Zielzusammensetzung eine gewünschte Sandkorngrößenverteilung umfasst und wobei das Verfahren das Versehen der Sandmischung mit der gewünschten Sandkorngrößenverteilung umfasst.

2. Verfahren nach Anspruch 1, wobei der Sand der zweiten Zusammensetzung mindestens ein mit Wasser reaktives Element umfasst, wobei das reaktive Element zum Beispiel Zement ist.

3. Verfahren nach Anspruch 1 oder 2,
wobei der Sand der zweiten Zusammensetzung behandelter Betonabfall ist und/oder wobei der Sand der zweiten Zusammensetzung Betonbrechersand ist, und/oder
wobei der Sand der zweiten Zusammensetzung Gesteinsbruchsand und/oder zertifizierten Sand von einer unbekannten Abbaustelle umfasst.

4. Verfahren nach einem der vorstehenden Ansprüche, wobei der zweite Sand der zweiten Zusammensetzung im Wesentlichen aus Körnern mit Korngrößen in einem Korngrößenbereich zwischen 63 mum und 8000 mum, vorzugsweise zwischen 100 mum und 500 mum, besteht.

5. Verfahren nach einem der vorstehenden Ansprüche, wobei das Zuführen von Sand der ersten Zusammensetzung, von Sand der zweiten Zusammensetzung, das Mischen des zugeführten Sandes und das Durchführen der mindestens einen Messung an einer Abbaustelle von Sand der ersten Zusammensetzung oder in der Nähe dieser Abbaustelle durchgeführt werden, vorzugsweise umfassend:
Extrahieren des Sandes der ersten Zusammensetzung an der Abbaustelle unter Verwendung des Sandverarbeitungssystems, insbesondere Absaugen des Sandes vom Grund eines Gewässers, und Transportieren des extrahierten Sandes zu den ersten Zufuhrmitteln, und/oder
Zuführen des Sandes der zweiten Zusammensetzung von einer Stelle, die von dem Sandverarbeitungssystem entfernt ist, zu der Abbaustelle, insbesondere Zuführen von Sand der zweiten Zusammensetzung per Schiff.

6. Verfahren nach einem der vorstehenden Ansprüche, wobei die Schritte des Verfahrens gleichzeitig und im Wesentlichen kontinuierlich durchgeführt werden.

7. Verfahren nach einem der vorstehenden Ansprüche,
wobei der Sand der ersten Zusammensetzung durch Zuführen von Sand einer ersten Sandfraktion und Sand einer oder mehrerer weiterer Sandfraktionen zu den ersten Zufuhrmitteln unter Verwendung erster Zufuhrmittel gebildet wird, wobei der Sandkorngrößenbereich jeder Sandfraktion bekannt ist,
optional umfassend das getrennte Zuführen jeder Sandfraktion der ersten Sandfraktion und der einen oder mehreren weiteren Sandfraktionen zu den ersten Zufuhrmitteln.

8. Verfahren nach Anspruch 7, wobei sich der Sandkorngrößenbereich jeder Sandfraktion von dem Sandkorngrößenbereich jeder anderen Sandfraktion unterscheidet und/oder wobei sich keiner der bekannten Bereiche der Sandkorngrößenverteilungen der Sandfraktionen überschneidet, wobei vorzugsweise die vorgegebenen Bereiche einen gemeinsamen kontinuierlichen Bereich abdecken.

9. Verfahren nach einem der vorstehenden Ansprüche,
wobei Sandfraktionen des Sandes der ersten Zusammensetzung Sandkorngrößenverteilungen aufweisen, die innerhalb eines oder mehrerer der Bereiche von 63 mum bis 250 mum, 250 mum bis 500 mum, 500 mum bis 2 mm und 2 mm bis 8 mm liegen, und/oder
wobei der Sand der zweiten Zusammensetzung eine Sandkorngrößenverteilung aufweist, die innerhalb des gemeinsamen kontinuierlichen Bereichs der Sandfraktionen liegt und eine Vielzahl der bekannten Bereiche überspannt.

10. Verfahren nach einem der vorstehenden Ansprüche,
wobei die Sandfraktionen des Sandes der ersten Zusammensetzung mindestens teilweise während des Zuführens durch die ersten Zuführmittel gemischt werden, um dem Sand der ersten Zusammensetzung eine gleichmäßigere Sandkorngrößenverteilung zu verleihen, und/oder
wobei das Steuern der Zufuhr das zeitliche Variieren der Menge umfasst, die pro Sandfraktion dem ersten Zufuhrmittel zugeführt wird.

11. Verfahren nach einem der vorstehenden Ansprüche,
wobei mindestens eine Messung an Sand der zweiten Zusammensetzung durchgeführt wird, während dieser Sand durch das zweite Zufuhrmittel zugeführt wird, gegebenenfalls an einer Probe dieses Sandes, und/oder
ferner umfassend, dass die Sandmischung nach dem Mischen unter Verwendung von Austragsmitteln, zum Beispiel einem Austragsförderer, ausgetragen wird, wobei die Austragsmittel die Sandmischung vorzugsweise an ein Transportmittel, vorzugsweise ein Schiff, abgeben.

12. Verfahren nach einem der vorstehenden Ansprüche,
wobei mindestens eine Messung an der Sandmischung durchgeführt wird, die durch das Austragsmittel ausgetragen wird, gegebenenfalls an einer Probe dieser Sandmischung, und/oder
wobei das Durchführen der mindestens einen Messung das Messen der Masse des Sandes, der eine Messstelle passiert, und/oder das Bestimmen der Sandkorngrößenverteilung des Sandes, der eine Messstelle passiert, umfasst.

13. Verfahren nach einem der vorstehenden Ansprüche, ferner umfassend die Zugabe eines Markers zu mindestens einem der Sande der ersten Zusammensetzung, des Sandes der zweiten Zusammensetzung und der Sandmischung, um die Herkunft der Sandmischung nachweisbar zu machen.

14. Sandverarbeitungssystem zur Gewinnung eines sandhaltigen Rohmaterials für Baumörtel, wobei das Betonausgangsmaterial eine vorbestimmte Zielzusammensetzung aufweist, das Sandverarbeitungssystem umfassend:
- erste Zuführmittel (101A-101D) zum Zuführen von Sand einer ersten Zusammensetzung, wobei der Sand der ersten Zusammensetzung eine oder mehrere unterschiedliche Sandfraktionen umfasst, wobei eine Sandfraktion einen vorher bekannten Sandkorngrößenbereich aus einer Vielzahl von Sandkorngrößenbereichen aufweist;
- zweite Zuführmittel (102) zum Zuführen von Sand einer zweiten Zusammensetzung, wobei die zweite Zusammensetzung zu Beginn unbekannt ist;
- einen Mischer (108) zum Mischen des zugeführten Sandes der ersten Zusammensetzung und des Sandes der zweiten Zusammensetzung, um eine Sandmischung zu erhalten;
- Messmittel (109), um mindestens eine Messung an mindestens einem der Sande der zweiten Zusammensetzung und der Sandmischung durchzuführen, um die Sandkorngrößenverteilung dieses Sandes zu bestimmen; und
- Bestimmungsmittel (110), um auf der Grundlage der Messung zu bestimmen, ob die Sandmischung die Zielzusammensetzung aufweist; und
- Steuermittel zum Steuern der ersten und/oder zweiten Zuführmittel auf der Grundlage der Messung, um die Sandmischung mit der Zielzusammensetzung zu versehen, wenn die Sandmischung nicht die Zielzusammensetzung aufweist, wobei die Zielzusammensetzung eine gewünschte Sandkorngrößenverteilung umfasst und die Steuermittel so konfiguriert sind, dass sie der Sandmischung die gewünschte Sandkorngrößenverteilung verleihen.

15. Sandverarbeitungssystem nach Anspruch 14, wobei das System so konfiguriert ist, dass es das Verfahren nach einem der Ansprüche 1 bis 13 durchführt.

16. Sandverarbeitungssystem nach einem der Ansprüche 14 bis 15, ferner umfassend eine Zerkleinerungseinheit, insbesondere einen Klumpenbrecher, zur mindestens teilweisen Zerkleinerung von stückigem Sand in der erhaltenen Sandmischung.

## Revendications

1. Procédé d'obtention d'un matériau de départ pour béton contenant du sable avec un système de traitement de sable, dans lequel le matériau de départ pour béton a une composition cible prédéterminée, le procédé comprenant :
- l'alimentation (301) d'un mélangeur en sable d'une première composition à l'aide de premiers moyens d'alimentation, dans lequel le sable de la première composition a une première distribution granulométrique, le sable comprend une ou plusieurs fractions différentes, et dans lequel une fraction de sable a une plage granulométrique de sable connue à l'avance parmi une pluralité de plages granulométriques de sable ;
- l'alimentation (302) d'un mélangeur en sable d'une seconde composition à l'aide de seconds moyens d'alimentation, dans lequel la seconde composition est définie par une seconde distribution granulométrique qui est inconnue au départ ;
- le mélange (303) du sable introduit de la première composition avec le sable introduit de la seconde composition dans le mélangeur dans le but d'obtenir un mélange de sables ;
- le fait d'effectuer (304) au moins une mesure sur au moins l'un du sable de la seconde composition et du mélange de sables dans le but de déterminer la distribution granulométrique de sable de ce sable ;
- le fait de déterminer (305) sur la base de la mesure si le mélange de sables a ladite composition cible ; et
- la commande des premiers et/ou seconds moyens d'alimentation sur la base de la mesure dans le but de conférer au mélange de sables la composition cible lorsque le mélange de sables n'a pas la composition cible, dans lequel la composition cible comprend une distribution granulométrique de sable souhaitée et dans lequel le procédé comprend le fait de conférer au mélange de sables la distribution granulométrique de sable souhaitée.

2. Procédé selon la revendication 1, dans lequel le sable de la seconde composition comprend au moins un élément réactif à l'eau, dans lequel l'élément réactif est par exemple du ciment.

3. Procédé selon la revendication 1 ou 2,
dans lequel le sable de la seconde composition est un déchet de béton traité et/ou dans lequel le sable de la seconde composition est du sable de concassage de béton, et/ou
dans lequel le sable de la seconde composition comprend du sable de roche brisée et/ou du sable certifié provenant d'un emplacement d'extraction inconnu.

4. Procédé selon l'une quelconque des revendications précédentes, dans lequel le second sable de ladite seconde composition est constitué essentiellement de grains ayant des granulométries comprises dans une plage de granulométries entre 63 mum et 8000 mum, de préférence entre 100 mum et 500 mum.

5. Procédé selon l'une quelconque des revendications précédentes, dans lequel l'alimentation en sable de la première composition, en sable de la seconde composition, le mélange du sable introduit et le fait d'effectuer l'au moins une mesure sont effectués à un emplacement d'extraction de sable de la première composition ou à proximité de cet emplacement d'extraction, comprenant de préférence :
l'extraction du sable de la première composition à l'emplacement d'extraction à l'aide du système de traitement de sable, notamment l'aspiration de sable depuis le fond d'une étendue d'eau, et le transport du sable extrait jusqu'aux premiers moyens d'alimentation, et/ou
l'alimentation en sable de la seconde composition d'un emplacement situé à une certaine distance du système de traitement de sable à l'emplacement d'extraction, en particulier l'alimentation en sable de la seconde composition par bateau.

6. Procédé selon l'une quelconque des revendications précédentes, dans lequel les étapes du procédé sont effectuées simultanément et de manière sensiblement continue.

7. Procédé selon l'une quelconque des revendications précédentes,
dans lequel le sable de la première composition est formé en alimentant les premiers moyens d'alimentation en sable d'une première fraction de sable et en sable d'une ou plusieurs autres fractions de sable à l'aide de premiers moyens d'alimentation, dans lequel la plage de granulométries de sable de chaque fraction de sable est connue,
comprenant facultativement l'alimentation séparée des premiers moyens d'alimentation en chaque fraction de sable de la première fraction de sable et en la ou les autres fractions de sable.

8. Procédé selon la revendication 7, dans lequel la plage de granulométries de sable de chaque fraction de sable diffère de la plage de granulométries de sable de toutes les autres fractions de sable et/ou dans lequel aucune des plages connues des distributions granulométriques de sable des fractions de sable ne se chevauche,
dans lequel les plages prédéterminées couvrent de préférence une plage continue commune.

9. Procédé selon l'une quelconque des revendications précédentes,
dans lequel les fractions de sable du sable de la première composition ont des distributions granulométriques de sable se situant dans une ou plusieurs des plages de 63 mum à 250 mum, 250 mum à 500 mum, 500 mum à 2 mm, et 2 mm à 8 mm, et/ou
dans lequel le sable de la seconde composition a une distribution granulométrique de sable se situant dans la plage continue commune des fractions de sable et couvrant une pluralité des plages connues.

10. Procédé selon l'une quelconque des revendications précédentes,
dans lequel les fractions de sable du sable de la première composition sont mélangées au moins partiellement pendant l'alimentation par les premiers moyens d'alimentation afin de conférer une distribution granulométrique de sable plus uniforme au sable de la première composition, et/ou
dans lequel la commande de l'alimentation comprend la variation dans le temps de la quantité introduite par fraction de sable dans les premiers moyens d'alimentation.

11. Procédé selon l'une quelconque des revendications précédentes,
dans lequel au moins une mesure est effectuée sur du sable de la seconde composition pendant que ce sable est en cours d'introduction par les seconds moyens d'alimentation, facultativement sur un échantillon de ce sable, et/ou
comprenant en outre, après le mélange, le déchargement du mélange de sables à l'aide de moyens de déchargement, par exemple un convoyeur de déchargement, dans lequel les moyens de déchargement déchargent de préférence le mélange de sables vers un moyen de transport, de préférence un bateau.

12. Procédé selon l'une quelconque des revendications précédentes,
dans lequel au moins une mesure est effectuée sur le mélange de sables en cours de déchargement par le moyen de déchargement, facultativement sur un échantillon de ce mélange de sables, et/ou
dans lequel le fait d'effectuer l'au moins une mesure consiste à mesurer la masse de sable passant par un emplacement de mesure et/ou à déterminer la distribution granulométrique de sable du sable passant par un emplacement de mesure.

13. Procédé selon l'une quelconque des revendications précédentes, comprenant en outre l'ajout d'un marqueur à au moins l'un du sable de la première composition, du sable de la seconde composition et du mélange de sables dans le but de rendre détectable l'origine du mélange de sables.

14. Système de traitement de sable permettant d'obtenir une matière première pour mortier de construction, qui contient du sable, dans lequel le matériau de départ pour béton a une composition cible prédéterminée, le système de traitement de sable comprenant :
- des premiers moyens d'alimentation (101A-101D) permettant d'alimenter en sable d'une première composition, dans lequel le sable de la première composition comprend une ou plusieurs fractions de sable différentes, dans lequel une fraction de sable a une plage granulométrique de sable connue à l'avance parmi une pluralité de plages granulométriques de sable ;
- des seconds moyens d'alimentation (102) permettant d'alimenter en sable d'une seconde composition, dans lequel la seconde composition est inconnue au départ ;
- un mélangeur (108) permettant de mélanger le sable introduit de la première composition et le sable de la seconde composition dans le but d'obtenir un mélange de sables ;
- des moyens de mesure (109) permettant d'effectuer au moins une mesure sur au moins l'un du sable de la seconde composition et du mélange de sables dans le but de déterminer la distribution granulométrique de sable de ce sable ; et
- des moyens de détermination (110) permettant de déterminer sur la base de la mesure si le mélange de sables a ladite composition cible ; et
- des moyens de commande permettant de commander les premiers et/ou seconds moyens d'alimentation sur la base de la mesure dans le but de donner au mélange de sables la composition cible lorsque le mélange de sables n'a pas la composition cible, dans lequel la composition cible comprend une distribution granulométrique de sable souhaitée et les moyens de commande sont configurés pour conférer au mélange de sables la distribution granulométrique de sable souhaitée.

15. Système de traitement de sable selon la revendication 14, dans lequel le système est configuré pour effectuer le procédé selon l'une quelconques des revendications 1 à 13.

16. Système de traitement de sable selon l'une quelconque des revendications 14 à 15, comprenant en outre une unité de broyage, en particulier un concasseur de grumeaux, permettant de broyer au moins partiellement tout sable grumeleux dans le mélange de sables obtenu.
